# EUROPEAN PATENT APPLICATION

(11) **EP 4 300 177 A1**
(43) Date of publication of application: **03.01.2024**
(21) Application number: 22759446.2
(22) Date of filing: 16.02.2022
(51) Int. Cl.: G02F 1/1334, B32B 7/023, B32B 27/18, G02F 1/13, G02F 1/1335, G02F 1/139

(54) **DECORATIVE FILM**

(30) Priority: 25.02.2021 JP 2021028192
(71) Applicant: Nitto Denko Corporation, Ibaraki-shi, Osaka 567-8680 (JP)
(72) Inventor: HIRAI Mariko, Ibaraki-shi, Osaka 567-8680 (JP); OTSUKA Masanori, Ibaraki-shi, Osaka 567-8680 (JP); SHIBUYA Akihiro, Ibaraki-shi, Osaka 567-8680 (JP)
(74) Representative: Hoffmann Eitle
(86) International application number: PCT/JP2022/006100
(87) International publication number: WO 2022/181407

(57) **Abstract**

The present invention provides a technology of switching the appearance of a product. A decorative film (**100**) according to an embodiment of the present invention includes: a light control layer (**10**) including a first transparent conductive film (**12**), a polymer dispersed liquid crystal layer (**14**) containing a polymer matrix and droplets dispersed in the polymer matrix, the droplets each containing a liquid crystal compound and a dichroic dye, and a second transparent conductive film (**16**) in the stated order from a viewer side thereof; and a reflective layer (**20**) arranged on a side of the light control layer (**10**) opposite to the viewer side.

## Description

### Technical Field

The present invention relates to a decorative film including a light control layer and a reflective layer.

### Background Art

A light control element having a configuration in which a polymer dispersed liquid crystal (hereinafter sometimes referred to as "PDLC") layer is sandwiched between a pair of transparent conductive films can change the extent to which transmitted light is scattered in accordance with the quantity of a voltage applied to the layer. The element can switch a state in which the light is scattered (a scattering state) and a state in which the light is transmitted (a non-scattering state or a transparent state) by, for example, switching a voltage applied state and a voltage non-applied state. The application of such light control element to various applications, such as a blind or curtain application, a display application, and a projection screen application, through utilization of its light control function has been investigated.

In addition, in recent years, from the viewpoint of further improving the degree of satisfaction of a purchaser, at the time of the development of a product, emphasis is placed on a design property as well as on functionality. In, for example, Patent Literature 1, there is a disclosure of a display apparatus including a decorative film that can transmit light, which has been projected from one surface side thereof, to the other surface side thereof to display information. According to such display apparatus, at the time of display by the display apparatus (when its power source is turned on), the information of the display apparatus can be displayed, and at the time of no display by the display apparatus (when the power source is turned off), the design of the decorative film can be viewed. As described above, there has been required a further advance of a technology of switching the appearance of the product, such as a color or a color tone.

### Citation List

### Patent Literature

[PTL 1] JP 2020-067565 A

### Summary of Invention

### Technical Problem

The present invention has been made to solve the above-mentioned problem, and a primary object of the present invention is to provide a technology of switching the appearance of a product.

### Solution to Problem

According to one aspect of the present invention, there is provided a decorative film, including: a light control layer including a first transparent conductive film, a polymer dispersed liquid crystal layer containing a polymer matrix and droplets dispersed in the polymer matrix, the droplets each containing a liquid crystal compound and a dichroic dye, and a second transparent conductive film in the stated order from a viewer side thereof; and a reflective layer arranged on a side of the light control layer opposite to the viewer side.

In one embodiment, the light control layer has a haze of 50% or more when no voltage is applied thereto.

In one embodiment, the light control layer has a haze of 15% or less when a voltage is applied thereto.

In one embodiment, the decorative film further includes a decorative layer on a viewer side of the reflective layer.

In one embodiment, the reflective layer has a total light reflectance of 50% or more.

### Advantageous Effects of Invention

The decorative film of the present invention includes the reflective layer on the side (hereinafter sometimes referred to as "back surface side") of the light control layer opposite to the viewer side, and the light control layer including the PDLC layer containing the dichroic dye in each of its liquid crystal droplets is used as the light control layer. With such configuration, when the light control layer is in a transparent state, light reflected by the reflective layer is viewed as it is. Meanwhile, when the light control layer is in a scattering state, the light reflected by the reflective layer is scattered, and a color derived from the dichroic dye is added thereto. As a result, the decorative film of the present invention can show different appearances under a voltage applied state and a voltage non-applied state. In addition, in the case where the reflective layer is arranged on the back surface side of the light control layer, and its reflected light is utilized, the film can show the above-mentioned appearances even when its configuration is such that light entering from the back surface side is absent.

### Brief Description of Drawings

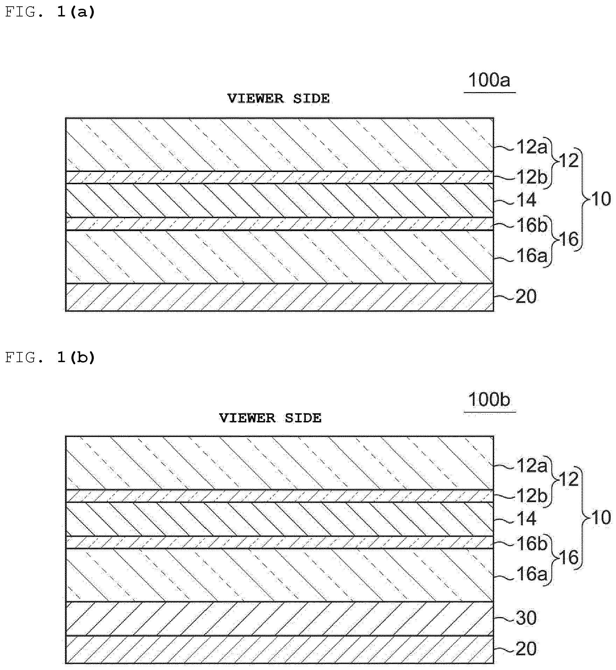

FIG. **1(a)** to FIG. **1(c)** are each a schematic sectional view of a decorative film in one embodiment of the present invention.

### Description of Embodiments

Preferred embodiments of the present invention are described below. However, the present invention is not limited to those embodiments. In this description, the expression "from ··· to ···" representing a numerical range includes the upper limit and lower limit numerical values thereof.

### A. Decorative Film

A decorative film according to an embodiment of the present invention includes: a light control layer including a first transparent conductive film, a polymer dispersed liquid crystal layer containing a polymer matrix and droplets dispersed in the polymer matrix, the droplets each containing a liquid crystal compound and a dichroic dye, and a second transparent conductive film in the stated order from its viewer side; and a reflective layer arranged on the side of the light control layer opposite to the viewer side. The decorative film may further include at least one decorative layer on the viewer side of the reflective layer in accordance with applications and the like. The light control layer may be a single layer, or a form in which a plurality of layers are used while being superimposed on each other is permitted.

FIG. **1(a)** to FIG. **1(c)** are each a schematic sectional view of the decorative film in one embodiment of the present invention. A decorative film **100a** illustrated in FIG. **1(a)** includes: a light control layer **10** including a first transparent conductive film **12,** a PDLC layer **14** containing a polymer matrix and droplets dispersed in the polymer matrix, the droplets each containing a liquid crystal compound and a dichroic dye, and a second transparent conductive film **16** in the stated order from its viewer side; and a reflective layer **20** arranged on the back surface side of the light control layer **10.** When the decorative film **100a** in which the light control layer **10** is in a transparent state is observed from the viewer side, light that has been reflected by the reflective layer **20** and has been transmitted through the light control layer **10** may be recognized. Accordingly, the appearance of the reflective layer **20** may be recognized as the appearance of the decorative film **100a.** Meanwhile, according to the decorative film **100a** in which the light control layer **10** is in a scattering state, light that has been reflected by the reflective layer **20,** and then has been scattered and colored by the light control layer **10** may be recognized. Accordingly, for example, when the light control layer **10** contains a red dichroic dye, the decorative film **100a** may show a red and opaque appearance.

A decorative film **100b** illustrated in FIG. **1(b)** includes: the light control layer **10** including the first transparent conductive film **12,** the PDLC layer **14** containing the polymer matrix and the droplets dispersed in the polymer matrix, the droplets each containing the liquid crystal compound and the dichroic dye, and the second transparent conductive film **16** in the stated order from its viewer side; the reflective layer **20** arranged on the back surface side of the light control layer **10;** and a decorative layer **30** arranged between the light control layer **10** and the reflective layer **20.** When the decorative film **100b** in which the light control layer **10** is in a transparent state is observed from the viewer side, light that has been reflected by the reflective layer **20,** and has been transmitted through the decorative layer **30** and the light control layer **10** is recognized. Accordingly, for example, when the decorative layer **30** is a yellow colored layer, the decorative film **100b** may show a yellow appearance. Meanwhile, according to the decorative film **100b** in which the light control layer **10** is in a scattering state, light that has been reflected by the reflective layer **20,** then has been transmitted through the decorative layer **30,** and has been scattered and colored by the light control layer **10** may be recognized. Accordingly, for example, when the decorative layer **30** shows a yellow color and the light control layer **10** contains a red dichroic dye, the decorative film **100b** may show an orange and opaque appearance.

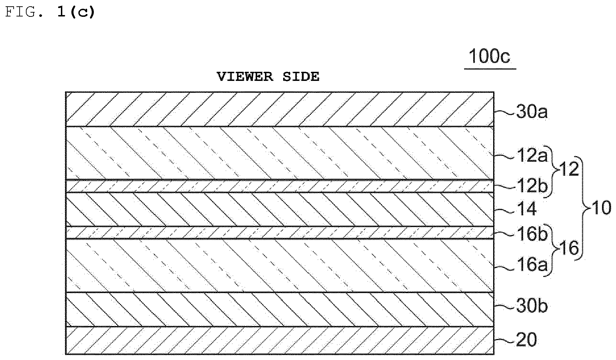

A decorative film **100c** illustrated in FIG. **1(c)** includes: the light control layer **10** including the first transparent conductive film **12,** the PDLC layer **14** containing the polymer matrix and the droplets dispersed in the polymer matrix, the droplets each containing the liquid crystal compound and the dichroic dye, and the second transparent conductive film **16** in the stated order from its viewer side; the reflective layer **20** arranged on the back surface side of the light control layer **10;** a viewer-side decorative layer **30a** arranged on the viewer side of the light control layer **10;** and a back surface-side decorative layer **30b** arranged between the light control layer **10** and the reflective layer **20.** When the decorative film **100c** in which the light control layer **10** is in a transparent state is observed from the viewer side, light that has been reflected by the reflective layer **20** and has been transmitted through the back surface-side decorative layer **30b,** the light control layer **10,** and the viewer-side decorative layer **30a** may be recognized. Accordingly, for example, when the viewer-side decorative layer **30a** shows a yellow color and the back surface-side decorative layer **30b** shows a red pattern, an appearance in which an orange pattern is displayed on a yellow background color may be recognized as the appearance of the decorative film **100c.** Meanwhile, according to the decorative film **100c** in which the light control layer **10** is in a scattering state, light that has been reflected by the reflective layer **20,** then has been transmitted through the back surface-side decorative layer **30b,** has been subsequently scattered and colored by the light control layer **10,** and has been further transmitted through the viewer-side decorative layer **30a** may be recognized. Accordingly, for example, when the viewer-side decorative layer **30a** shows a yellow color, the back surface-side decorative layer **30b** shows a red pattern, and the light control layer **10** contains a red dichroic dye, the decorative film **100c** may show an opaque orange appearance.

The configuration of the decorative film is not limited to the illustrated examples described above. For example, the decorative film may include a decorative layer only on the viewer side of the light control layer. In addition, the decorative film may include any appropriate additional constituent as long as the effect of the present invention is obtained. Examples of the additional constituent include a protective layer, a surface-treated layer (e.g., a hard coat layer), a pressure-sensitive adhesive layer, and a decorative layer that is locally decorated.

When the light control layer is in a transparent state, the decorative film may have a total light reflectance of, for example, 20% or more, preferably from 30% to 95%, more preferably from 40% to 95%. In addition, when the light control layer is in a scattering state, the decorative film may have a total light reflectance of, for example, 15% or less, preferably from 0.1% to 12%, more preferably from 0.1% to 10%. The decorative film having such reflectance can exhibit its decorative property through utilization of reflected light even when light entering from the back surface side is absent.

When the light control layer is in a transparent state, the decorative film using the reflective layer having a transmitting property may have a total light transmittance of, for example, from 0.1% to 50%, preferably from 0.1% to 30%. In addition, when the light control layer is in a scattering state, the decorative film may have a total light transmittance of, for example, from 0.1% to 30%, preferably from 0.1% to 15%. The decorative film having such transmittance can exhibit its decorative property through utilization of light entering from the back surface side in addition to reflected light.

The decorative film may have an elongated shape. The term "elongated shape" as used herein means a long and thin shape whose length is sufficiently long as compared to its width, and the term includes, for example, a long and thin shape whose length is 10 or more times, preferably 20 or more times as long as its width.

The total thickness of the decorative film may be, for example, from 50 um to 500 µm, preferably from 100 um to 300 µm.

The constituents of the decorative film are specifically described below.

### A-1. Light Control Layer

The light control layer includes the first transparent conductive film, the polymer dispersed liquid crystal layer containing the polymer matrix and the droplets dispersed in the polymer matrix, the droplets each containing the liquid crystal compound and the dichroic dye, and the second transparent conductive film in the stated order from its viewer side.

The total thickness of the light control layer is, for example, from 50 um to 250 µm, preferably from 80 um to 200 µm.

The light control layer may have a total light transmittance of, for example, 70% or more, preferably from 75% to 99%, more preferably from 80% to 99% under a transparent state. In addition, the light control layer may have a haze of, for example, 15% or less, preferably from 0.1% to 10%, more preferably from 0.1% to 7% under a transparent state. When the total light transmittance and haze of the light control layer in a transparent state fall within the ranges, the reflective layer or back surface-side decorative layer of the decorative film can be suitably recognized.

The light control layer may have a total light transmittance of, for example, 60% or more, preferably from 70% to 99%, more preferably from 80% to 99% under a scattering state. In addition, the light control layer may have a haze of, for example, 50% or more, preferably from 60% to 99%, more preferably from 70% to 99% under a scattering state. When the total light transmittance and haze of the light control layer in a scattering state fall within the ranges, the decorative film can show an appearance in which the color tone of the light control layer is added to the appearance of the reflective layer and/or the decorative layer. In addition, when the haze is, for example, 70% or more, preferably 80% or more, the reflective layer or the back surface-side decorative layer can be suitably shielded.

The ratio of the transmittance of the light control layer in a transparent state for light having a wavelength of from 380 nm to 700 nm to the transmittance thereof for light having a wavelength of 550 nm is preferably from 1 to 1.3, more preferably from 1 to 1.1. When the transmittance ratio in a transparent state falls within the ranges, the light control layer can transmit light without causing any coloring derived from the layer.

In one embodiment, under a state in which a voltage is applied to the PDLC layer, the light control layer is brought into a transparent state, and under a state in which no voltage is applied thereto, the layer is brought into a scattering state (normal mode). In this embodiment, when no voltage is applied, the liquid crystal compound and the dichroic dye are not aligned, and hence coloring resulting from the dichroic dye and scattering resulting from the liquid crystal compound occur. Thus, the light control layer shows a colored and opaque appearance. Meanwhile, when a voltage is applied, the liquid crystal compound and the dichroic dye are aligned. As a result, the coloring resulting from the dichroic dye and the scattering resulting from the liquid crystal compound are suppressed, and hence the light control layer can show a transparent appearance that is colorless or is lightly colored as compared to that when no voltage is applied.

In another embodiment, under a state in which a voltage is applied to the PDLC layer, the light control layer is brought into a scattering state, and under a state in which no voltage is applied thereto, the layer is brought into a transparent state (reverse mode). In this embodiment, when no voltage is applied, the liquid crystal compound and the dichroic dye are aligned by an alignment film arranged on the surface of a transparent electrode layer, and hence the light control layer shows a transparent appearance that is colorless or is lightly colored. When a voltage is applied, the alignment of each of the liquid crystal compound and the dichroic dye is disturbed to cause coloring and scattering. As a result, the light control layer can show an opaque appearance that is deeply colored as compared to that when no voltage is applied.

As described above, the degree to which light is scattered by the light control layer (consequently, its haze) changes in accordance with a voltage to be applied. The voltage (driving voltage) to be applied to the PDLC layer when a transparent state and a scattering state are switched is, for example, 100 V or less, preferably from 1 V to 30 V.

### A-1-1. First Transparent Conductive Film

The first transparent conductive film **12** typically includes a first transparent substrate **12a** and a first transparent electrode layer **12b** arranged on one side of the first transparent substrate **12a,** and the first transparent electrode layer **12b** is arranged so as to be on the PDLC layer **14** side. The first transparent conductive film may further include any appropriate functional layer as required. Examples of such functional layer include a refractive index-adjusting layer, an antireflection layer, and a hard coat layer. The hard coat layer may be arranged on, for example, one side, or each of both the sides, of the first transparent substrate. The refractive index-adjusting layer may be arranged on, for example, the first transparent substrate side of the first transparent electrode layer. Further, an alignment film may be arranged on the surface of the first transparent electrode layer opposite to the first transparent substrate in accordance with the driving mode of the light control layer.

The surface resistance value of the first transparent conductive film is preferably from 0.1 Ω/□ to 1,000 Ω/□, more preferably from 0.5 Ω/□ to 300 Ω/□, still more preferably from 1 Ω/□ to 200 Ω/□.

The haze of the first transparent conductive film is preferably 5% or less, more preferably 3% or less, still more preferably from 0.01% to 1%.

The total light transmittance of the first transparent conductive film is preferably 70% or more, more preferably 80% or more, still more preferably 85% or more.

The first transparent substrate is formed from any appropriate material. Specifically, a glass substrate or a polymer substrate is preferably used, and the polymer substrate is more preferred.

The above-mentioned polymer substrate is typically a polymer film containing a thermoplastic resin as its main component. Examples of the thermoplastic resin include: a cycloolefin-based resin such as polynorbornene; an acrylic resin; a polyester-based resin such as a polyethylene terephthalate-based resin; a polycarbonate resin; and a cellulose-based resin. Of those, a cycloolefin-based resin or a polyethylene terephthalate-based resin may be preferably used. The above-mentioned thermoplastic resins may be used alone or in combination thereof.

The thickness of the first transparent substrate is preferably from 20 um to 200 µm, more preferably from 30 um to 100 µm.

The first transparent electrode layer may be formed by using, for example, a metal oxide, such as indium tin oxide (ITO), zinc oxide (ZnO), or tin oxide (SnO₂). In this case, the metal oxide may be an amorphous metal oxide or a crystallized metal oxide. Alternatively, the first transparent electrode layer may be formed of a metal nanowire such as a silver nanowire (AgNW), a carbon nanotube (CNT), an organic conductive film, a metal layer, or a laminate thereof. The first transparent electrode layer may be patterned into a desired shape in accordance with purposes.

The first transparent electrode layer has a thickness of preferably from 0.01 um to 0.10 um, more preferably from 0.01 um to 0.045 µm.

The first transparent electrode layer may be typically arranged on one surface of the first transparent substrate by a method such as sputtering. After the formation of a metal oxide layer by the sputtering, the layer can be crystallized by annealing. The annealing is performed by, for example, thermally treating the layer at from 120°C to 300°C for from 10 minutes to 120 minutes.

### A-1-2. Second Transparent Conductive Film

The second transparent conductive film 16 typically includes a second transparent substrate **16a** and a second transparent electrode layer **16b** arranged on one side of the second transparent substrate **16a,** and the second transparent electrode layer **16b** is arranged so as to be on the PDLC layer **14** side. The second transparent conductive film may further include any appropriate functional layer as required. Examples of such functional layer include a refractive index-adjusting layer, an antireflection layer, and a hard coat layer. The hard coat layer may be arranged on, for example, one side, or each of both the sides, of the second transparent substrate. The refractive index-adjusting layer may be arranged on, for example, the second transparent substrate side of the second transparent electrode layer. Further, an alignment film may be arranged on the surface of the second transparent electrode layer opposite to the second transparent substrate in accordance with the driving mode.

The surface resistance value of the second transparent conductive film is preferably from 0.1 Ω/□ to 1,000 Ω/□, more preferably from 0.5 Ω/□ to 300 Ω/□, still more preferably from 1 Ω/□ to 200 Ω/□.

The haze of the second transparent conductive film is preferably 5% or less, more preferably 3% or less, still more preferably from 0.1% to 1%.

The total light transmittance of the second transparent conductive film is preferably 70% or more, more preferably 80% or more, still more preferably 85% or more.

The same descriptions as those of the first transparent electrode layer and the first transparent substrate are applicable to the second transparent electrode layer and the second transparent substrate, respectively. The first transparent conductive film and the second transparent conductive film may have the same configuration, or may have different configurations.

### A-1-3. Polymer Dispersed Liquid Crystal Layer

The PDLC layer contains the polymer matrix and the droplets dispersed in the polymer matrix, the droplets each containing the liquid crystal compound and the dichroic dye.

The average particle diameter of the above-mentioned droplets when viewed from a direction perpendicular to the main surface of the PDLC layer is, for example, 0.3 um or more, preferably 1 um or more. In addition, the average particle diameter of the droplets is, for example, 7 um or less, preferably 5 um or less. When the average particle diameter is excessively small, the scattering properties of the light control layer for light beams having longer wavelengths become insufficient, and hence undesired coloring of the PDLC layer may occur. Meanwhile, when the average particle diameter is excessively large, scattering in a visible light region becomes insufficient, and hence an efficient scattering property is not obtained. The average particle diameter "d" of the droplets is a volume-average particle diameter.

A non-polymeric liquid crystal compound having a birefringence Δn (=nₑ-nₒ; nₑ represents the refractive index of a liquid crystal compound molecule in its major axis direction, and nₒ represents the refractive index of the liquid crystal compound molecule in its minor axis direction) of from 0.1 to 0.4 at a wavelength of 589 nm may be preferably used as the liquid crystal compound. The birefringence Δn of the liquid crystal compound is more preferably from 0.15 to 0.3. When the birefringence of the liquid crystal compound falls within the above-mentioned ranges, scattering in the visible light region can be efficiently obtained.

The dielectric anisotropy of the liquid crystal compound may be positive or negative. The liquid crystal compound may be, for example, a nematic-, smectic-, or cholesteric-type liquid crystal compound. A nematic-type liquid crystal compound is preferably used because excellent transparency of the PDLC layer in a transparent state can be achieved. Examples of the nematic-type liquid crystal compound include a biphenyl-based compound, a phenyl benzoate-based compound, a cyclohexylbenzene-based compound, an azoxybenzene-based compound, an azobenzene-based compound, an azomethine-based compound, a terphenyl-based compound, a biphenyl benzoate-based compound, a cyclohexylbiphenyl-based compound, a phenylpyridine-based compound, a cyclohexylpyrimidine-based compound, a cholesterol-based compound, and a fluorine-based compound.

Any appropriate dichroic dye may be used as the dichroic dye in accordance with, for example, an appearance, a toning property, and a transmitting property to be desired. The dichroic dyes may be used alone or in combination thereof.

Examples of the dichroic dye include iodine, a dichroic direct dye including a disazo compound, a dichroic direct dye including a trisazo compound, a tetrakisazo compound, or the like, a liquid crystalline azo pigment, a polycyclic dye, and an (azo) dye having a sulfonic acid group. Specific examples thereof include C.I. Direct Yellow 12, C.I. Direct Yellow 28, C.I. Direct Yellow 44, C.I. Direct Yellow 142, C.I. Direct Orange 26, C.I. Direct Orange 39, C.I. Direct Orange 71, C.I. Direct Orange 107, C.I. Direct Red 2, C.I. Direct Red 31, C.I. Direct Red 39, C.I. Direct Red 79, C.I. Direct Red 81, C.I. Direct Red 117, C.I. Direct Red 247, C.I. Direct Green 80, C.I. Direct Green 59, C.I. Direct Blue 1, C.I. Direct Blue 71, C.I. Direct Blue 78, C.I. Direct Blue 168, C.I. Direct Blue 202, C.I. Direct Violet 9, C.I. Direct Violet 51, C.I. Direct Brown 106, and C.I. Direct Brown 223. In addition, such dyes developed for polarizing films as disclosed in WO 2009/057676 A1, WO 2007/145210 A1, WO 2006/057214 A1, and JP 2004-251963 A may be used in accordance with purposes. Those dyes may be used as free acids, or alkali metal salts (e.g., a Na salt, a K salt, and a Li salt), ammonium salts, or salts of amines.

The total content of the liquid crystal compound and the dichroic dye in the PDLC layer is, for example, from 20 wt% to 70 wt%, preferably from 40 wt% to 60 wt%. In one embodiment, the content of the dichroic dye in the PDLC layer is, for example, from 0.1 wt% to 5 wt%, preferably from 0.5 wt% to 1 wt% with respect to the liquid crystal compound.

A resin for forming the above-mentioned polymer matrix may be appropriately selected in accordance with, for example, the light transmittance of the PDLC layer, the refractive index of the above-mentioned liquid crystal compound, and the adhesive strengths of the layer with the transparent conductive films. Examples thereof include: water-soluble resins or water-dispersible resins, such as a urethane-based resin, a polyvinyl alcohol-based resin, a polyethylene-based resin, a polypropylene-based resin, and an acrylic resin; and curable resins, such as a liquid crystal polymer, a (meth)acrylic resin, a silicone-based resin, an epoxy-based resin, a fluorine-based resin, a polyester-based resin, and a polyimide resin. Of those, a water-soluble or water-dispersible urethane-based resin and a water-soluble or water-dispersible acrylic resin may be preferably used.

The content of the resin for forming the polymer matrix in the PDLC layer is, for example, from 30 wt% to 80 wt%, preferably from 40 wt% to 60 wt%.

The thickness of the PDLC layer is, for example, from 3 um to 30 µm, preferably from 5 um to 20 µm.

### A-1-4. Light Control Layer Production Method

The light control layer may be produced by any appropriate method. Specific examples thereof include production methods of an emulsion system and a polymerization-induced phase separation system.

The light control layer production method of the emulsion system includes, for example, applying an emulsion application liquid containing the resin for forming the polymer matrix, the liquid crystal compound, and the dichroic dye to the transparent electrode layer surface of one transparent conductive film to form an applied layer, and drying the applied layer to cause the resin for forming the polymer matrix to form the polymer matrix. The emulsion application liquid is preferably an emulsion containing the resin for forming the polymer matrix in its continuous phase and containing the liquid crystal compound and the dichroic dye in its dispersed phase, and may be, for example, an emulsion containing a mixed liquid of the resin for forming the polymer matrix and an application solvent (e.g., water, an aqueous organic solvent, or a mixed liquid thereof) in its continuous phase, and containing the liquid crystal compound and the dichroic dye in its dispersed phase. The application and drying of the emulsified application liquid may result in the formation of a PDLC layer having such a configuration that the droplets each containing the liquid crystal compound and the dichroic dye are dispersed in the polymer matrix. The light control layer is typically obtained by laminating the other transparent conductive film on the formed PDLC layer.

When the emulsion system is used, the emulsion application liquid may be prepared by: producing a liquid crystal-dispersed liquid containing capsules each containing the liquid crystal compound and the dichroic dye (liquid crystal capsules) whose particle diameters and particle diameter distribution have been controlled to predetermined values in advance by a membrane emulsification method or the like; and mixing the liquid crystal-dispersed liquid and the resin for forming the polymer matrix. The membrane emulsification method enables preparation of a liquid crystal-dispersed liquid containing liquid crystal capsules having predetermined particle diameters and having a uniform particle size distribution. In addition, when the liquid crystal compound and the dichroic dye that have been turned into particles by emulsification in advance are dispersed in the resin for forming the polymer matrix, the dissolution of the dichroic dye in the polymer matrix is prevented, and hence a light control layer having a high dichroic ratio can be obtained.

In the membrane emulsification method, a liquid crystal-dispersed liquid containing liquid crystal capsules each having a desired particle diameter may be obtained by passing a mixed liquid of the liquid crystal compound, the dichroic dye, and a dispersion medium through a porous membrane having through-holes a plurality of times. The number of times that the mixed liquid is passed through the porous membrane may be set to, for example, 10 times or more. The hole diameter of each of the through-holes of the porous membrane is preferably from about substantially 1 times to about substantially 3 times as large as the diameter that the liquid crystal capsules are each desired to have. In addition, the flow rate of the dispersed liquid at the time of its passage through the porous membrane may be, for example, from 10 mL/min/cm² to 150 mL/min/cm², preferably from 30 mL/min/cm² to 90 mL/min/cm². For details about the membrane emulsification method, reference may be made to disclosures in, for example, JP 04-355719 A and JP 2015-40994 A (these disclosures are incorporated herein by reference).

The light control layer production method of the polymerization-induced phase separation system includes, for example, applying an application liquid containing a radiation-curable resin for forming the polymer matrix, the liquid crystal compound, and the dichroic dye to the transparent electrode layer surface of one transparent conductive film to form an applied layer, laminating the other transparent conductive film on the applied layer to form a laminate, and applying a radiation to the laminate to polymerize the resin for forming the polymer matrix, thereby causing a phase separation between the polymer matrix, and the liquid crystal compound and the dichroic dye. The application liquid is preferably in a uniform phase state. Alternatively, the following may be performed: a space between a pair of transparent conductive films laminated via a spacer is filled with the application liquid, and then the phase separation is performed by the application of the radiation.

### A-2. Reflective Layer

The reflective layer reflects light that has entered from the viewer side of the decorative film. The reflective layer may have a transmitting property (i.e., the reflective layer may be a semi-transmissive reflective layer).

The total light reflectance of the reflective layer is, for example, 50% or more, preferably 60% or more, more preferably from 70% to 95%.

When the reflective layer has a transmitting property, its total light reflectance may be, for example, from 30% to 60%, preferably from 40% to 50%, and its total light transmittance may be, for example, from 40% to 70%, preferably from 50% to 60%.

Any appropriate configuration may be adopted as the reflective layer. For example, the reflective layer may be a specular reflective layer, or may be a diffusive reflective layer. The use of the specular reflective layer can enlarge a change in appearance of the decorative film between the transparent state and scattering state of the light control layer. The specular reflectance of the reflective layer may be, for example, 25% or more, preferably from 40% to 95%. In addition, the use of the reflective layer having metallic luster can impart a metallic lustrous feeling to the appearance of the decorative film.

Specific examples of the reflective layer include: a resin sheet having a high reflectance (e.g., an acrylic plate); a metal thin plate or metal foil made of aluminum, stainless steel, or the like; a deposited sheet obtained by depositing aluminum, silver, or the like from the vapor onto a substrate such as a resin film made of polyester or the like; a laminate of a substrate such as a resin film made of polyester or the like and metal foil made of aluminum or the like; and a resin film having voids formed therein.

The thickness of the reflective layer may be appropriately set in accordance with applications and the like. The thickness of the reflective layer is, for example, from 20 um to 300 µm, preferably from 30 um to 100 µm.

### A-3. Decorative Layer

The decorative layer contains a coloring material so as to display desired display contents (e.g., a design, a pattern, and a character). The decorative layer may be, for example, a colored layer containing a matrix and the coloring material mixed into the matrix, or a printed layer printed on at least part of the surface of a substrate film.

The total light transmittance of the decorative layer is, for example, from 40% to 90%, preferably from 50% to 90%, more preferably from 60% to 90%.

Any appropriate coloring material may be used as the coloring material in accordance with the display contents of the decorative layer. Specific examples of the coloring material include anthraquinone-based, triphenylmethane-based, naphthoquinone-based, thioindigo-based, perinone-based, perylene-based, squarylium-based, cyanine-based, porphyrin-based, azaporphyrin-based, phthalocyanine-based, subphthalocyanine-based, quinizarin-based, polymethine-based, rhodamine-based, oxonol-based, quinone-based, azo-based, xanthene-based, azomethine-based, quinacridone-based, dioxazine-based, diketopyrrolopyrrole-based, anthrapyridone-based, isoindolinone-based, indanthrone-based, indigo-based, thioindigo-based, quinophthalone-based, quinoline-based, and triphenylmethane-based dyes.

In addition, a pigment may be used as the coloring material. Specific examples of the pigment include black pigments (e.g., carbon black, bone black, graphite, iron black, and titanium black), an azo-based pigment, a phthalocyanine-based pigment, polycyclic pigments (e.g., quinacridone-based, perylene-based, perinone-based, isoindolinone-based, isoindoline-based, dioxazine-based, thioindigo-based, anthraquinone-based, quinophthalone-based, metal complex-based, and diketopyrrolopyrrole-based pigments), a dye lake-based pigment, white extender pigments (e.g., titanium oxide, zinc oxide, zinc sulfide, clay, talc, barium sulfate, and calcium carbonate), chromatic pigments (e.g., chrome yellow, a cadmium-based pigment, chrome vermilion, nickel titanium, chrome titanium, yellow iron oxide, red iron oxide, zinc chromate, red lead, ultramarine blue, prussian blue, cobalt blue, chrome green, chromium oxide, and bismuth vanadate), luminescent pigments (e.g., a pearl pigment, an aluminum pigment, and a bronze pigment), and fluorescent pigments (e.g., zinc sulfide, strontium sulfide, and strontium aluminate).

The matrix may be preferably, for example, a resin film. Any appropriate resin may be used as a resin for forming the resin film. Specifically, the resin may be a thermoplastic resin, may be a thermosetting resin, or may be an active energy ray-curable resin. Examples of the active energy ray-curable resin include an electron beam-curable resin, a UV-curable resin, and a visible light-curable resin. Specific examples of the resin include epoxy resins, (meth)acrylates (e.g., methyl methacrylate and butyl acrylate), norbornene, polyethylene, poly(vinyl butyral), poly(vinyl acetate), polyurea, polyurethane, aminosilicone (AMS), polyphenylmethylsiloxane, polyphenylalkylsiloxane, polydiphenylsiloxane, polydialkylsiloxane, silsesquioxane, silicone fluoride, vinyl and hydride-substituted silicone, styrene-based polymers (e.g., polystyrene, amino polystyrene (APS), poly(acrylonitrile ethylene styrene) (AES)), a polymer crosslinked with a difunctional monomer (e.g., divinylbenzene), a polyester-based polymer (e.g., polyethylene terephthalate), a cellulose-based polymer (e.g., triacetylcellulose), a vinyl chloride-based polymer, an amide-based polymer, an imide-based polymer, a vinyl alcohol-based polymer, an epoxy-based polymer, a silicone-based polymer, and an acrylic urethane-based polymer. Those resins may be used alone or in combination thereof (e.g., a blend or a copolymer). Those resins may each be subjected to treatment, such as stretching, heating, or pressurization, after the formation of its film.

The ratio at which the coloring material is blended into the matrix may be set to any appropriate ratio in accordance with, for example, the kind of the coloring material and a desired light absorption characteristic. The blending ratio of the coloring material is, for example, from 0.01 part by weight to 100 parts by weight, more preferably from 0.01 part by weight to 50 parts by weight with respect to 100 parts by weight of a matrix material.

When the matrix is a resin film, the decorative layer is bonded to the light control layer via, for example, a pressure-sensitive adhesive layer or an adhesive layer. Alternatively, the decorative layer may be formed by: applying a curable resin composition containing the coloring material to the surface of the light control layer; and curing the composition.

When the decorative layer is a printed layer, a printing method is not particularly limited, and examples thereof include inkjet printing, gravure printing, offset printing, and silk screen printing.

The substrate film on which the printed layer is printed is, for example, a transparent resin film or the above-mentioned colored layer in which the matrix is a resin film. In addition, the transparent conductive films for forming the light control layer may each be used as the substrate film. For example, the following may be performed: the decorative layer is printed on the outer surface of the light control layer; or a transparent conductive film having the configuration [printed layer/transparent substrate/transparent electrode layer] is produced, and the transparent conductive film is used to produce the light control layer. Still further, the reflective layer may be used as the substrate film.

When the decorative film includes both of the viewer-side decorative layer and the back surface-side decorative layer, these layers may have the same configuration, or may have different configurations.

### B. Applications of Decorative Film

The decorative film described in the section A can exhibit a decorating function or a displaying function through utilization of ambient light by being bonded to any appropriate place of, for example, a product or a building material. In addition, when a semi-transmissive reflective layer is used, the film can exhibit a function as a smart mirror by being combined with a display or the like.

### Examples

The present invention is specifically described below by way of Example. However, the present invention is by no means limited to Example. Measurement methods for characteristics are as described below. In addition, unless otherwise specified, "part(s)" and "%" in Example and Comparative Example are by weight.

### (1) Thickness

Measurement was performed with a digital micrometer (manufactured by Anritsu Corporation, product name: "KC-351C").

### (2) Volume-average Particle Diameter of Liquid Crystal Capsules in Liquid Crystal-dispersed Liquid

0.1 Weight percent of a liquid crystal-dispersed liquid was added to 200 ml of an electrolyte aqueous solution (manufactured by Beckman Coulter, Inc., "ISOTON II"), and the resultant mixed liquid was used as a measurement sample. The particle diameters of particles in the sample were measured with MULTISIZER 3 (manufactured by Beckman Coulter, Inc., aperture size=20 um), and the statistics of volumes were collected for each discretized particle diameter by dividing the measured values into 256 sections arranged at equal intervals in the range of from 0.4 um to 12 um on a logarithmic scale, followed by the calculation of the volume-average particle diameter of the particles. When particles each having a particle diameter of 12 um or more were present, the volume-average particle diameter was calculated by: setting the aperture size to 30 µm; and dividing the measured values into 256 sections arranged at equal intervals in the range of from 0.6 um to 18 um on a logarithmic scale to collect the statistics of volumes for each discretized particle diameter.

### (3) Hue

A hue was measured with a spectrophotometer (manufactured by Hitachi High-Tech Science Corporation, UH-4150). Chromaticities "x" and "y" in each sample were measured, and their averages when the number of "n" was 3 were calculated.

### (4) Total Light Transmittance

A total light transmittance was measured in conformity with JIS K 7136:2000 with a haze meter.

### (5) Total Light Reflectance

A total light reflectance was measured with CM-26dg manufactured by Konica Minolta, Inc.

### [Example 1]

### (First and Second Transparent Conductive Films)

An ITO layer was formed on one surface of each of PET substrates (thickness: 50 um) by a sputtering method. Thus, transparent conductive films each having the configuration [transparent substrate/transparent electrode layer (surface resistance: 100 Ω)] were obtained.

### (Production of Liquid Crystal Compound)

Compounds having the following composition were mixed at 150°C for 20 minutes, and were then slowly cooled to room temperature. Thus, a liquid crystal compound (1) having a Δn of 0.20, a viscosity of 21 cP, a Δε of 10.1, and a liquid crystal temperature of from 3°C to 52°C was obtained.

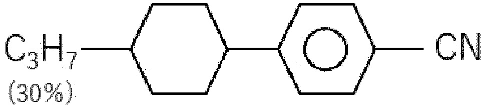

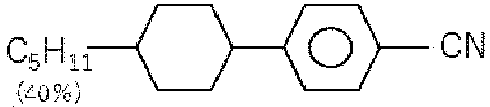

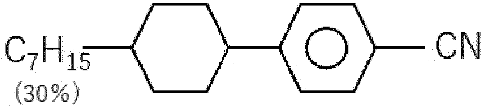

### (Production of Liquid Crystal-dispersed Liquid)

50 Parts of the liquid crystal compound (1), 0.5 part of a yellow dichroic dye (manufactured by Hayashibara Co., Ltd., product name: "G-470"), 49 parts of pure water, and 0.5 part of a dispersant (manufactured by DKS Co., Ltd., product name: "NOIGEN ET-159") were mixed, and were stirred with a homogenizer at 100 rpm for 10 minutes to be coarsely dispersed. The coarsely dispersed liquid was caused to permeate through a separation membrane (manufactured by SPG Technology Co., Ltd., "SPG PUMPING CONNECTOR", pore diameter: 5 um) having a uniform particle size distribution at a flow rate of 80 mL/min/cm² so as to pass from the outside of the membrane to the inside thereof at room temperature. The operation was performed 10 times. The volume-average particle diameter of liquid crystal capsules in the resultant liquid crystal-dispersed liquid was 2.5 µm.

### (Production of Emulsion Application Liquid)

50 Parts of the liquid crystal-dispersed liquid obtained by the membrane emulsification was mixed with 50 parts of a urethane emulsion solution (manufactured by Kusumoto Chemicals, Ltd., product name: "NeoRez R967", solvent=water, solid content concentration=40%). Thus, an emulsion application liquid was produced.

### (Production of Light Control Layer)

The above-mentioned emulsion application liquid was applied to the transparent electrode layer-side surface of the first transparent conductive film, and was dried at 40°C to form a PDLC layer having a thickness of 10 um (normal mode). After that, the second transparent conductive film was laminated on the PDLC layer so that its transparent electrode layer-side surface faced the PDLC layer, to thereby produce a light control layer.

### (Production of Decorative Film)

Red printing was performed on the substrate-side surface of a specular film having the configuration [metallic luster layer/transparent PET substrate] (manufactured by Toray Industries, Inc., reflectance: 68%) to provide a reflective layer with a printed layer. The reflective layer with a printed layer was bonded to the back surface side of the light control layer via an acrylic pressure-sensitive adhesive layer so that its printed layer side faced the light control layer. Thus, a decorative film having the configuration [light control layer/printed layer (decorative layer)/reflective layer] was obtained.

The respective characteristics of the decorative film obtained in Example were evaluated. The results are shown in Table 1. The term "voltage applied state" refers to a state in which an AC voltage of 30 V is applied to the light control layer with an AC power source "EC750SA" manufactured by NF Corporation.

**Table 1**

| | | Example 1 |
|---|---|---|
| Scattering state (voltage non-applied state) | Reflectance | 7% |
| | Chromaticity "x" | 0.40 |
| | Chromaticity "y" | 0.39 |
| | Displayed color | Orange |
| Transparent state (voltage applied state) | Reflectance | 56% |
| | Chromaticity "x" | 0.36 |
| | Chromaticity "y" | 0.35 |
| | Displayed color | Red |

As shown in Table 1, the color tone of the decorative film of Example in a voltage applied state significantly changed as compared to that in a voltage non-applied state, and hence the film showed different appearances under the states. Specifically, under an opaque state (scattering state) when no voltage was applied, the mixed color of a red color resulting from the printed layer and a yellow color along with the color development of the light control layer appeared, and hence the decorative film showed an opaque orange color. When the AC voltage was applied thereto to drive the light control layer, to thereby bring the film into a transparent state, metallic luster resulting from the reflective layer and the red color resulting from the printed layer were combined with each other, and hence the decorative film showed a lustrous red color.

### Industrial Applicability

The decorative film of the present invention may be suitably used as, for example, a display medium having a decorative property.

### Reference Signs List

- **10**: light control layer
- **12**: first transparent conductive film
- **14**: PDLC layer
- **16**: second transparent conductive film
- **20**: reflective layer
- **30**: decorative layer
- **100**: decorative film

## Claims

1. A decorative film, comprising:
a light control layer including a first transparent conductive film, a polymer dispersed liquid crystal layer containing a polymer matrix and droplets dispersed in the polymer matrix, the droplets each containing a liquid crystal compound and a dichroic dye, and a second transparent conductive film in the stated order from a viewer side thereof; and
a reflective layer arranged on a side of the light control layer opposite to the viewer side.

2. The decorative film according to claim 1, wherein the light control layer has a haze of 50% or more when no voltage is applied thereto.

3. The decorative film according to claim 1 or 2, wherein the light control layer has a haze of 15% or less when a voltage is applied thereto.

4. The decorative film according to any one of claims 1 to 3, further comprising a decorative layer on a viewer side of the reflective layer.

5. The decorative film according to any one of claims 1 to 4, wherein the reflective layer has a total light reflectance of 50% or more.
